Europäisches Patentamt

European Patent Office

Office européen des brevets

(11) Veröffentlichungsnummer: **0 484 694 A2**

## EUROPÄISCHE PATENTANMELDUNG

(21) Anmeldenummer: **91117426.6**

(22) Anmeldetag: **12.10.91**

(51) Int. Cl.⁵: **B60G 17/056**, B60G 17/08

(30) Priorität: **07.11.90 DE 4035313**

(43) Veröffentlichungstag der Anmeldung:
**13.05.92 Patentblatt 92/20**

(84) Benannte Vertragsstaaten:
**DE FR GB SE**

(71) Anmelder: **ROBERT BOSCH GMBH**
**Postfach 30 02 20**
**W-7000 Stuttgart 30(DE)**

(72) Erfinder: **Tischer, Michael, Dipl.-Ing.(FH)**
**Schillerstrasse 14**
**W-7101 Abstatt(DE)**
Erfinder: **Wanner, Michael, Dipl.-Ing.**
**Ahornstrasse 126**
**W-7031 Holzgerlingen(DE)**
Erfinder: **Kallenbach, Rainer Dr.-Ing.**
**Grimmstrasse 8**
**W-7000 Stuttgart 1(DE)**

(54) **System zum Regeln eines Fahrwerkes.**

(57) Bei einem System zum Regeln eines Fahrwerkes, insbesondere zum Regeln von Federzylindern, welche gleichzeitig die Funktion eines semiaktiven Stoßdämpfers wahrnehmen können und zwischen Radaufhängungen und Fahrzeugaufbau angeordnet sind, soll zumindest eine Kammer des Federzylinders über eine Leitung bzw. Zweigleitung mit einer Fördereinrichtung, Speicher od. dgl. für ein Druckmedium verbunden und zwischen Fördereinrichtung, Speicher od. dgl. und der Kammer zumindest ein Regelglied eingeschaltet sein. Dabei ist in dem Regelglied ein Regelventil angeordnet, welches auf eine Druckänderung in einer Ableitung zwischen Regelventil und Leitung anspricht.

Fig. 2

## Stand der Technik

Die Erfindung betrifft ein System zum Regeln eines Fahrwerkes, insbesondere zum Regeln von Federzylindern, welche gleichzeitig die Funktion eines semiaktiven Stoßfämpfers wahrnehmen können und zwischen Radaufhängungen und Fahrzeugaufbau entsprechend dem Oberbegriff von Anspruch 1 angeordnet sind.

Insbesondere im Bereich des Kraftfahrzeugbaus strebt die Entwicklung von elektronischen Fahrwerkregelungssystemen auf eine gezielte Anpassung der Dämpfungscharakteristik auf den jeweiligen Fahrzustand des Fahrzeuges. Die gerichtete Dämpfereinstellung, beispielsweise durch in Abhängigkeit von Steuersignalen einstellbare Ventile, erfolgt dabei abhängig von Sensorsignalen, welche verschiedene Parameter des Fahrzustandes (z.B. Fahrzeuggeschwindigkeit, Fahrzeugneigung, Quer-, Vertikalbeschleunigung, Hub-, Nick- und Rollbewegungen) erfassen. Darüberhinaus sollen im niederfrequenten Bereich der Aufbaubewegungen aktive Eingriffe zur Reaktion von Nick-, Hub- und Rollbewegung realisiert werden.

Bei den Steuersignalen werden sogenannte passive Steuersignale von aktiven Steuersignalen unterschieden. Passive Steuersignale sind auf eine langsame, adaptive Anpassung der Dämpfung in Abhängigkeit beispielsweise vom fahrerseitig gewünschten Fahrverhalten, von den Straßenbedingungen oder von der Fahrzeuggeschwindigkeit gerichtet.

Die aktiven Steuersignale dagegen sollen innerhalb möglichst kurzer Zeitintervalle eine unmittelbare Beeinflussung der jeweiligen Absolutgeschwindigkeit des Fahrzeugaufbaus (Heben, Senken, Nicken, Rollen) herbeiführen. Dabei kann das gesamte Dämpfersystem so ausgelegt werden, daß die passive Dämpfungssteuerung die Dämpfungswirkung mit Bezug auf Zug und Druck gleichsinnig vergrößert oder verringert, während die aktive Dämpfungssteuerung die Dämpfung als Funktion externer Signale auch unsymmetrisch macht, also die Dämpfungswirkung in der Druck- und Zugstufe entgegengesetzt beeinflußt. Insgesamt ergibt sich hier ein sogenanntes semi-aktives Dämpfersystem.

Ein System zum Regeln von Stoßdämpfern ist beispielsweise aus der DE-PS 16 30 058 bekannt. Dort sind zwei Arbeitskammern eines Stoßdämpfers oder auch Federbeins über außenliegende Leitungen an eine Einrichtung angeschlossen, die aus einer Pumpe und zwei Speichern besteht. In den Verbindungsleitungen zu dem Federbein sind als Ventile lediglich einfach wirkende Rückschlagventile vorgesehen. Mit einer solchen Einrichtun läßt sich aber die Dämpferhärte eines Stoßdämpfers nicht verändern, denn hierfür muß von außen über die Pumpe Energie zugeführt werden, was verhältnismäßig langsam erfolgt und einen gewissen Leistungsbedarf bedeutet.

Aus der DE-OS 33 04 815 ist ferner eine Möglichkeit zum Regeln von Stoßdämpfern gezeigt, wobei bezüglich der Federhärte und der Dämpferhärte auf einen mittleren Betriebsfall optimiert und die entsprechenden Teile bzw. deren Parameter darauf konstruktiv festgelegt werden. Diese Parameter bleiben dann im Fahrbetrieb unverändert. Hierdurch werden aber insbesondere extreme Betriebsfälle, wie beispielsweise ein leeres oder ein voll beladenes Fahrzeug oder sich ändernde Bewegungsparameter des Fahrzeugs (Kurvenfahrt, Bremsen, Beschleunigung, komfortable Autobahnfahrt od. dgl.) nicht erfaßt.

Entsprechend der US-PS 3 807 678 wird ebenfalls in die Voluminaverdrängung des Druckmittels in dem Stoßdämpfer aktiv eingegriffen. Zu diesem Zweck sind beide Arbeitskammern eines Stoßdämpfers jeweils zueinander über Kreuz und parallel miteinander über entgegengesetzt gerichtete, einen Fluß des Druckmittels ausschließlich in einer Richtung zulassende Ventile geschaltet, wobei dann die von diesen Ventilen jeweils durchgelassene Druckmittelmenge noch "aktiv" durch entsprechende Ansteuerung der Ventile mittels geeigneter aufbereiteter Sensorsignale bestimmt wird. Die außerhalb liegende Feder bleibt dabei völlig passiv, so daß es sich bei dem Gesamtsystem um eine semi-aktive Regelung handelt.

Die oben beschriebene semi-aktive Dämpferregelung reicht nicht zur optimalen Aufbauberuhigung. Hierzu wird ein teilaktives Fahrwerkregelsystem erforderlich, welches dem Federzylinder aktive Energie zu- oder abführt.

Aufgabe der vorliegenden Erfindung ist es, einen mit der Bewegung des Fahrzeugaufbaus einhergehenden niederfrequenten Druckverlauf entsprechend einer Sollvorgabe einstellen zu können, ohne daß dabei hochfrequente Drucküberlagerungen, welche sich durch Straßenverhältnisse auf Seiten des Stoßdämpfers ergeben, auf das Stellglied rückwirken.

## Vorteile der Erfindung

Die Erfindung gemäß dem kennzeichnenden Teil von Patentanspruch 1 hat den Vorteil, daß das entsprechende Regelventil in wesentlichen Arbeitslagen nicht von außen angesteuert und geschaltet wird, sondern auf Druck in der Leitung zur Stoßdämpferkammer hin reagiert, so daß dieser wesentliche Parameter nicht durch Drucksensoren erfaßt und dann in komplizierten Steuer- und Regeleinheiten umgesetzt werden muß. Sobald sich der Druck in der Leitung zur Kammer hin verändert, kann auch das Regelventil angesprochen und in eine andere Arbeitsstellung geschaltet werden.

Bevorzugt ist deshalb eine Ableitung von dieser Zweigleitung nach der Kammer des Federzylinders vorgesehen, welche in eine Kammer des Regelventils einmündet und dort einen Kolben eines Schiebers unter Druck setzen kann. Dieser Schieber besitzt im vorliegenden Ausführungsbeispiel drei Arbeitsstellungen, nämlich eine Rücklaufstellung, eine Sperrstellung und eine Zulaufstellung. Je nachdem, wie hoch der Druck in der Kammer ist, wird der Schieber in eine entsprechende Arbeitsstellung verbracht.

Um allerdings eine bestimmte Ausgangsstellung einhalten zu können, stützt sich der Schieber über seinen Kolben in der Kammer gegen eine Feder ab, während er andererseits von einem Stellmagneten angegriffen wird.

Über diesen Stellmagneten sind ebenfalls Schaltungen in bestimmte Arbeitsstellungen möglich, wobei dies vor allem für eine Schaltung in die Zulaufstellung gilt, in der der Schieber gegen den Druck der Feder in der Kammer geführt werden muß.

Bevorzugt soll in die Ableitung noch eine Drossel eingeschaltet sein, damit nicht jede, auch nur geringfügige Druckänderung zu einer Schaltung des Regelventils führt.

Ferner wird der Ableitung ein Speicher zugeordnet, so daß auch in diesem Speicher erst Druckmedium aufgenommen werden kann, bevor das Regelventil anspricht. Auch hierdurch wird gewährleistet, daß insbesondere hochfrequente Drucküberlagerungen durch Straßenunebenheiten abgefangen werden, ohne daß das Regelventil ansprechen muß.

Des weiteren sollte in dem oben genannten Regelglied dem Regelventil noch ein schnell schaltendes Dämpferventil zugeordnet sein. Auch dieses schnell schaltende Dämpferventil dient dazu, bei erheblichen Straßenunebenheiten entsprechend angepaßte Dämpferkräfte zur Rad- und Aufbaubedämpfung zu erzeugen. Das Regelventil soll vor allem einen mit der Bewegung des Fahrzeugaufbaus einhergehenden, niederfrequenten Druckverlauf entsprechend einer Sollvorgabe einstellen können. Hierzu dienen natürlich entsprechende Pumpen und Speicher sowie Steuer- und Kontrolleinrichtungen, auf die jedoch nicht näher eingegangen wird.

Wesentlich bei der vorliegenden Erfindung ist das Regelventil, welches sehr robust und kaum temperaturabhängig ist.

Bei Vorgabe einer Druckänderung im Federbein wird der Ventilkolben durch den Magneten aus seiner Ruhelage ausgelenkt und in eine entsprechende Arbeitsposition verschoben. Auf Grund der Druckänderung auch in der Leitung entsteht eine rückstellende Kraft auf den Ventilkolben, welche der Magnetkraft entgegenwirkt und den Ventilkolben in seine Ruhelage bewegt. Am Ventil selbst findet keine Lageregelung von außen statt. Es ist eine geringere Rechenleistung des Systemrechners erforderlich, da kein Druckregelkreis und keine Signalaufbereitung notwendig wird.

Zeichnung

Die Erfindung wird anhand der Zeichnung näher erläutert; diese zeigt in

Figur 1    einen blockschaltbildlich dargestellten Regelkreis für eine teilaktive Fahrwerkregelung;

Figur 2    eine blockschaltbildliche Darstellung eines Teils einer teilaktiven Fahrwerkregelung in einer weiteren Ausführungsform.

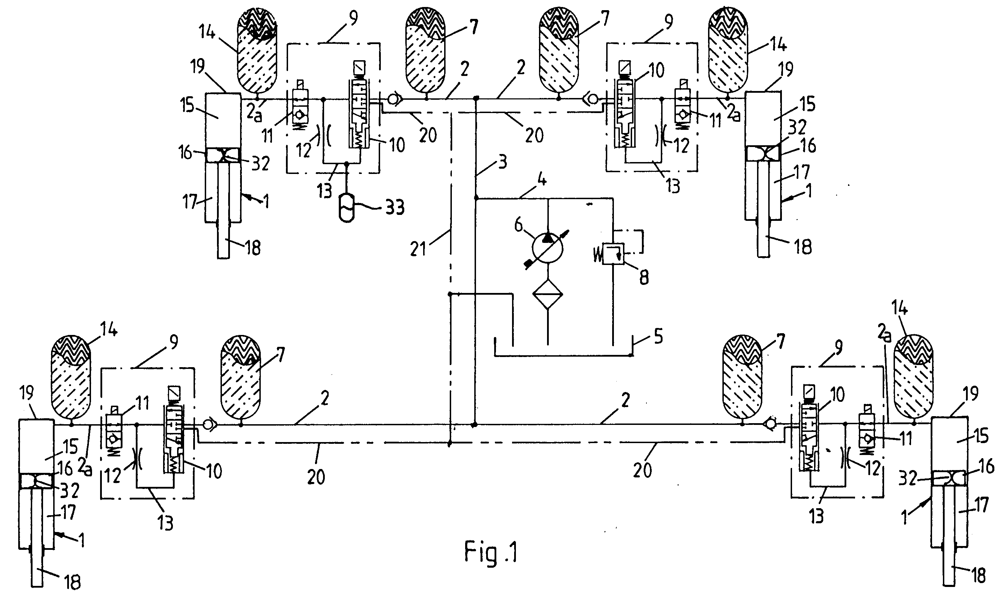

Gemäß Figur 1 sind vier Stoßdämpfer 1, beispielsweise eines Kraftfahrzeuges, jeweils über eine Zweigleitung 2 mit einer Hauptleitung 3 verbunden, in welche eine Leitung 4 zu einem Vorratsbehälter 5 einmündet. Aus diesem Vorratsbehälter 5 kann mittels einer Pumpe 6 unter Zwischenschaltung eines hydraulisch Flüssigkeit entnommen und in die Hauptleitung 3 eingespeist werden. In erster Linie dient die Pumpe 6 der Auffüllung von Speichern 7, welche als erste Regelelemente in die jeweilige Zweigleitung 2 eingeschaltet sind.

Sobald die Speicher 7 in gewünschtem Ausmaße aufgefüllt sind, schaltet die Pumpe 6 ab. Sollte der Druck in der Leitung 4 bzw. Hauptleitung 3 durch die Förderung der Pumpe 6 zu hoch sein, kann überschüssiges hydraulisches Druckmedium über ein Druckbegrenzungsventil 8 zurück zum Vorratsbehälter 5 abfließen. Auf diese Weise wird auch bei beispielswei einem nicht gewünschten Dauerlauf der Pumpe 6 bewirkt, daß die Speicher 7 nur einem vorher eingestellten und gewünschten Umfang mit Druckmedium gefüllt sind.

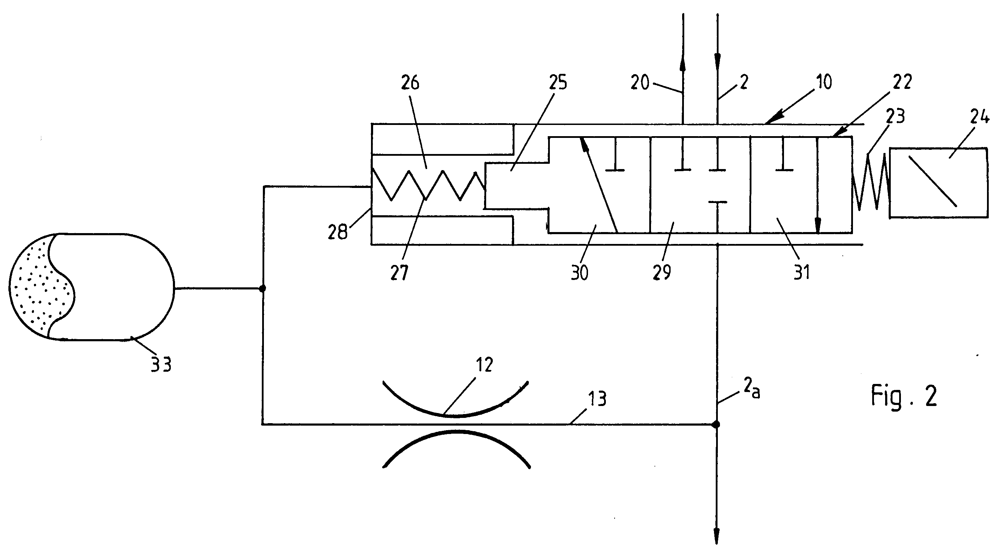

Auf jeden Speicher 7 folgt in jeder Zweigleitung 2 ein Regelglied 9, welches im wesentlichen aus einem Regelventil 10, einem Dämpferventil 11 sowie einer Drossel 12 besteht. Das Regelventil 10 wird näher zu Figur 2 beschrieben. Das Dämpferventil 11 ist ein schnell schaltendes Ventil und besitzt eine Durchlaßstellung und eine mit einem Rückschlagventil besetzte einseitige Sperrstellung, so daß ein Rückfluß von Druckmedium von dem Stoßdämpfer 1 verhindert werden kann. Die Drossel 12 sitzt in einer Ableitung 13, über die eine Kammer 26 (siehe Figur 2) in dem Regelventil 10 mit der Zweigleitung 2 zwischen Dämpferventil 11 und Regelventil 10 verbunden ist.

Auf das Regelglied 9 folgt angeschlossen an eine Leitung 2a ein weiterer Speicher 14. Dieser Speicher 14 dient insbesondere der Aufnahme und dem Ausgleich von Druckmedium, wenn das Dämpferventil 11 geschlossen ist.

Nach dem Speicher 14 mündet die Leitung 2a in eine obere Kammer 15 des Stoßdämpfers 1 ein. Ein Dämpferkolben 16 trennt die obere Kammer 15 von einer unteren Kammer 17, welche auch von einer Kolbenstange 18 durchfahren ist. Obere Kammer 15 und untere Kammer 17 bilden zusammen einen Zylinder 19, der beispielsweise an einem nicht näher dargestellten Chassis eines Kraftfahrzeuges befestigt ist. Der Kolben 18 ist dagegen mit beispielsweise einer nicht näher gezeigten Radachse verbunden.

Neben der Zweigleitung 2 ist mit dem Regelventil 10 noch jeweils ein Rücklauf 20 verbunden, wobei eine gemeinsame Verbindungsleitung 21 in den Vorratsbehälter 5 einmündet.

Gemäß Figur 2 sitzt in dem Regelventil 10 ein Schieber 22, der sich einends über eine Feder 23 gegen einen Stellmagneten 24 abstützt. Andernends greift der Schieber 22 mit einem Kolben 25 in die Kammer 26 ein und stützt sich in dieser Kammer 26 über eine Feder 27 gegen den Boden 28 des Regelventils 10 ab. Dieser Kolben 25 kann in der Kammer 26 durch Druck aus der Ableitung 13 beaufschlagt werden. Hierdurch verändert sich die Stellung des Schiebers 22, so daß Zweigleitung 2 und Rücklauf 20 unterschiedlich geschaltet werden können. In der gezeigten Sperrstellung ist die Zweigleitung 2 von der Verbindung zur Leitung 2a unterbrochen und der Rücklauf 20 abgesperrt. Wird der Schieber 22 nach rechts verschoben, wird die Leitung 2a zwischen dem Stoßdämpfer 1 und dem Regelventil 10 mit dem Rücklauf verbunden. Erfolgt dagegen eine Verschiebung des Schiebers 22 nach links, bleibt der Rücklauf 20 gesperrt, während ein Durchlaß von Druckmedium vom Speicher 7 bzw. der Pumpe 6 zum Stoßdämpfer 1 geöffnet wird. Die mittlere Sperrstellung des Schiebers 22 ist mit 29 gekennzeichnet, die Rücklaufstellung mit 30 und die Zulaufstellung mit 31.

Die erfindungsgemäße Fahrwerkregelung geschieht folgendermaßen:
Ist lediglich eine passive Fahrwerkregelung erforderlich, so ist das Dämpferventil 11 auf Sperrstellung geschaltet, so daß der Stoßdämpfer seine normale bekannte Tätigkeit vollführen kann, wobei die Dämpfung im wesentlichen von im Dämpferkolben 16 vorhandenen Dämpfungsventilen 32 vorgenommen wird. Hierbei wirkt selbstverständlich noch der Speicher 14 als Ausgleichsbehälter mit.

Ermitteln nicht näher gezeigte Sensoren eine andere gewünschte Regelung, so schaltet das Dämpferventil 11 in Durchgangsstellung und das Regelventil 10 nimmt seine Tätigkeit auf. Ist ein Zulauf von Druckmedium zum Stoßdämpfer 1 erforderlich, so wird über den Stellmagnet 24 das Regelventil 10 in Zulaufstellung 31 geschaltet. Erhöht sich nachfolgend der mittlere Druck in den Kammern 15 und 17, so fließt Druckmedium über die Drossel 12 in die Kammer 26 und verschiebt über den Kolben 25 den Schieber 22 in Schließposition 29. Aus diesem Grunde können zusätzliche Drucksensoren am Stoßdämpfer 1 oder in der Leitung 2a entfallen. Aus diesem Grunde werden hochfrequente Radbewegungen und niederfrequente Bewegungen eines Fahrzeugaufbaus von dem Regelglied 9 getrennt bearbeitet. Das Regelventil 10 kann den mit der Bewegung des Fahrzeugaufbaus einhergehenden, niederfrequenten Druckverlauf entsprechend einer Sollvorgabe einstellen. Hochfrequente Drucküberlagerungen, welche sich durch beispielsweise Straßenunebenheiten auf Seiten des Stoßdämpfers ergeben, werden über den hydraulischen Tiefpaßfilter bestehend aus Drosselstelle 12 und Speicher 33 vom direkten Eingriff auf das Regelglied 30 ausgeschlossen. Niederfrequente Druckänderungen gemäß Sollvergabe könne jedoch direkt auf das Regelglied zugreifen und einen mittleren Druck im Federzylinder vorgeben.

Der einstellbare Solldruck ergibt sich somit aus einem Kräftegleichgewicht zwischen der Magnetkraft des Stellmagneten 24 und der Kraft aus dem Druck in Kammer 26 und Wirkfläche am Schieber 22.

Gemäß Figur 2 ist der Ableitung 13 zwischen der Drossel 12 und dem Regelventil 10 noch ein zusätzlicher Speicher 33 zugeordnet. Dabei muß der Speicher so ausgelegt sein, daß Positionsänderungen des Kolbens 25 keinen merklichen Einfluß auf den Speicherdruck haben, beispielsweise wenn der Schieber 22 durch den Stellmagneten 24 in seine Zulaufstellung 31 verschoben wird.

Ferner muß selbstverständlich eine Abstimmung zwischen Drossel 12 und dem Speicher 33 erfolgen, wodurch die Eckfrequenz der Tiefpaßcharakteristik definiert wird.

**Patentansprüche**

1. System zum Regeln eines Fahrwerkes, insbesondere zum Regeln von Federzylindern, welche gleichzeitig die Funktion eines semiaktiven Stoßdämpfers wahrnehmen können und zwischen Radaufhängungen und Fahrzeugaufbau angeordnet sind, wobei zumindest eine Kammer des Federzylinders über eine Leitung bzw. Zweigleitung mit einer Fördereinrichtung, Speicher od. dgl. für ein Druckmedium verbunden und zwischen Fördereinrichtung, Speicher od. dgl. und der Kammer zumindest ein Regelglied eingeschaltet ist,

dadurch gekennzeichnet,

daß in dem Regelglied (9) ein Regelventil (10) angeordnet ist, welches auf eine Druckänderung in einer Ableitung (13) zwischen Regelventil (10) und Leitung (2a) anspricht.

2. System nach Anspruch 1, dadurch gekennzeichnet, daß die Ableitung (13) in eine Kammer (26) einmündet, in welcher ein Kolben (25) eines Schiebers (22) gleitend lagert.

3. System nach Anspruch 2, dadurch gekennzeichnet, daß in der Kammer (26) zwischen einem Boden (28) und dem Kolben (25) eine Feder (27) angeordnet ist.

4. System nach Anspruch 2 oder 3, dadurch gekennzeichnet, daß der Schieber (22) andererseits des Kolbens (25) mit einem Stellmagneten (24) ggfs. über eine Feder (23) verbunden ist.

5. System nach einem der Ansprüche 2 bis 4, dadurch gekennzeichnet, daß der Schieber (22) eine Rücklaufstellung (30), eine Sperrstellung (29) und eine Zulaufstellung (31) aufweist.

6. System nach Anspruch 5, dadurch gekennzeichnet, daß von der Fördereinrichtung (6) her ein Zulauf als Zweigleitung (2) zum Regelventil (10) und als Leitung (2a) von diesem zur Kammer (15) des Federzylinders (1) und ein Rücklauf (20) vom Regelventil (10) zu einem Vorratsbehälter (5), Speicher od. dgl. vorhanden ist.

7. System nach wenigstens einem der Ansprüche 4 bis 6, dadurch gekennzeichnet, daß über das Regelventil (10) ein mit der Bewegung des Fahrzeugaufbau einhergehender, niederfrequenter Druckverlauf entsprechend einer Sollvergabe einstellbar ist.

8. System nach Anspruch 7, dadurch gekennzeichnet, daß in die Ableitung (13) eine Drossel (12) eingeschaltet ist.

9. System nach Anspruch 8, dadurch gekennzeichnet, daß von der Ableitung (13) ein Speicher (33) abzweigt, wobei Drossel (12) und Speicher (33) einen Tiefpaßfilter bilden.

10. System nach wenigstens einem der Ansprüche 1 bis 9, dadurch gekennzeichnet, daß dem Regelventil (10) in dem Regelglied noch ein Absperrventil (11) zugeordnet ist, welches eine Durchlaufstellung und eine Sperrstellung für den Rücklauf aus der Kammer (15) aufweist.

Fig.1

Fig. 2

EP 0 484 694 A2